Europäisches Patentamt

European Patent Office

Office européen des brevets

(11) Veröffentlichungsnummer: **0 453 770 A2**

# (12) EUROPÄISCHE PATENTANMELDUNG

(21) Anmeldenummer: **91104446.9**

(22) Anmeldetag: **21.03.91**

(51) Int. Cl.5: **H01H 21/10**, H01H 21/22, B60Q 1/42

(30) Priorität: **27.04.90 DE 9004826 U**

(43) Veröffentlichungstag der Anmeldung:
**30.10.91 Patentblatt 91/44**

(84) Benannte Vertragsstaaten:
**DE FR IT NL SE**

(71) Anmelder: **MAN Nutzfahrzeuge Aktiengesellschaft**
**Dachauer Strasse 667 Postfach 50 06 20**
**W-8000 München 50(DE)**

(72) Erfinder: **Kraus, Wolfgang**
**Heinrich-Buz-Weg 10**
**W-8000 München 50(DE)**
Erfinder: **Hinderhofer, Jürgen**
**Rumfordstrasse 2**
**W-8000 München 5(DE)**

(54) **Schalter am Lenkstock eines Kraftfahrzeuges.**

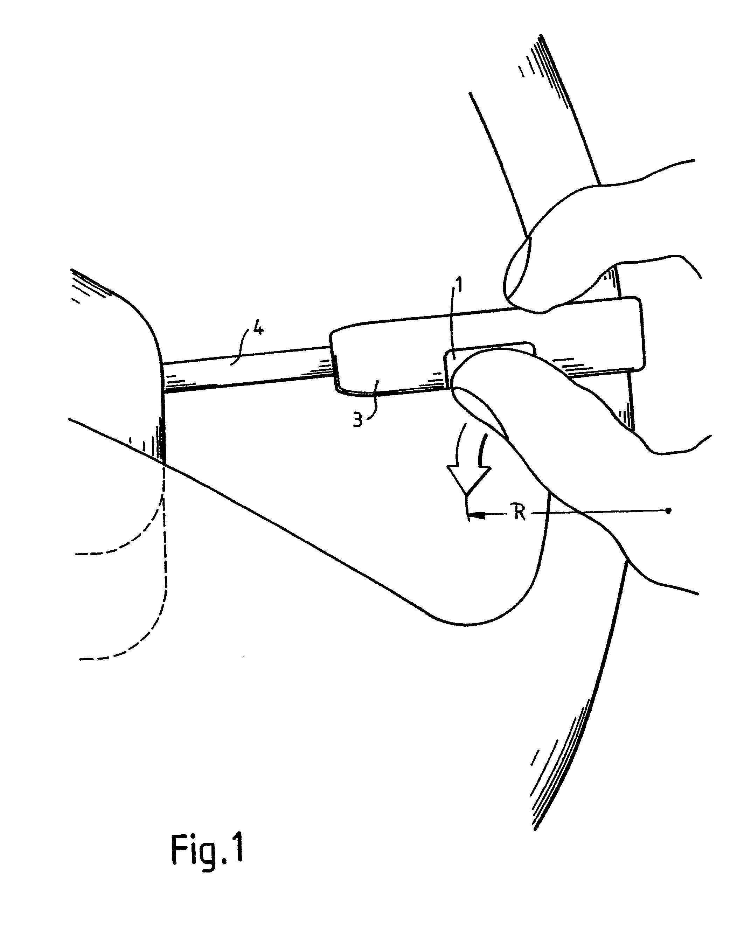

(57) Die Fig. 1 zeigt einen am Lenkstock (4) eines Straßenfahrzeuges angeordneten Schalter (1). Der Schalter (1) ist als Schwenkschalter ausgebildet. Er ist derart im Hohlraum des Lenkstockhandgriffes (3) angeordnet, daß die Betätigungsrichtung von Schalter (1) und Lenkstock (4) gleich sind.

Fig.1

EP 0 453 770 A2

Die Neuerung bezieht sich auf einen Schalter am Lenkstock eines Straßenfahrzeuges.

Aufgabe der Neuerung ist es, einen am Lenkstock angeordneten Schalter leicht bedienbar zu gestalten.

Dies wird neuerungsgemäß dadurch erreicht, daß der Schalter, als Schwenkschalter ausgebildet, im Hohlraum des Lenkstockhandgriffes angeordnet ist und zwar derart, daß die Betätigungsrichtung von Schalten und Lenkstock gleich sind. Solcherart entspricht die Bewegungsrichtung vom Daumens des Fahrers der Richtung der Schaltbewegung des Lenkstockes, das heißt, die Drehrichtung des Schalters liegt in Drehrichtung des Daumens bzw. um seinen Drehpunkt am Daumengelenk.

Nach einer vorteilhaften Ausführung der Neuerung weist der Lenkstockgriff etwa handtellerbreit von seinem Ende eine Ausnehmung im Seitenwandbereich und teilweise in der oberen Wandung auf, die konturengleich von dem Schwenkschalter ausgefüllt ist, der, als einarmiger Vinkelhebel ausgebildet, im unteren Seitenwandbereich des Lenkstockgriffes schwenkbar gelagert ist und mit seinem abgewinkelten freien Ende den verbliebenen Oberwandbereich dichtend untergreift. Auf diese Weise entsteht eine optisch anspruchsvolle Schalter-Lenkstock-Einheit, die auch preiswert in der Herstellung ist. Weitere vorteilhafte Merkmale der Neuerung sind den Ansprüchen 3 bis 5 zu entnehmen. Die Neuerung ist in einem Ausführungsbeispiel dargestellt und beschrieben.

Es zeigen:

Fig. 1    die Draufsicht auf einen Lenkstock mit Lenkstockschalter in Zuordnung zum Lenkrad,

Fig. 2    einen Schnitt durch den Lenkstockgriff in Lenkstockschalter-Ein-Position,

Fig. 3    einen Schnitt durch den Lenkstockgriff in Schwenkschalter-Aus-Position,

Fig. 4    eine perspektivische Darstellung des Lenkstockhandgriffes mit Schwenkschalter.

Fig. 1 zeigt einen Lenkstock 4 in der Zuordnung zum Lenkrad. Im Handgriff 3 des Lenkstockes 4 ist der Schwenkschalter 1 angeordnet, der durch Daumendruck des Bedienungsmannes betätigt werden kann. Dabei entspricht die Betätigungsebene dem Daumendrehwinkel, dessen Radius mit R eingezeichnet ist.

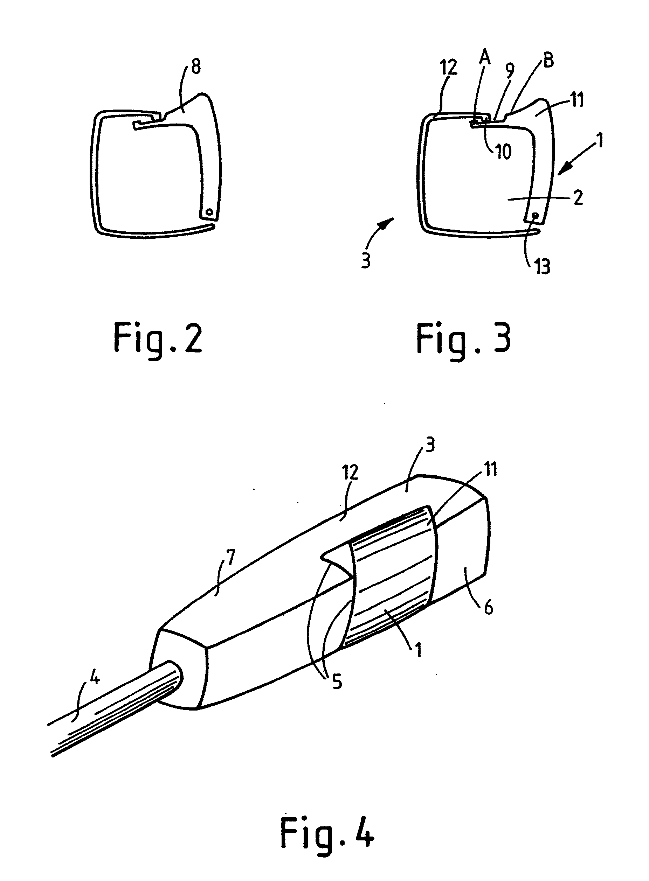

Die Figuren 2 und 3 zeigen einen Querschnitt durch den Handgriff 3 des Lenkstockes 4 in der Ebene des Schwenkschalters 1. Dabei zeigt Fig. 2 die eingeschaltete Position des Schwenkschalters und Fig. 3 die ausgeschaltete Position. Der Handgriff 3 ist kastenförmig mit einem Hohlraum 2 ausgebildet. Im Seitenwandbereich 6 und bereichsweise im Oberwandbereich 7 ist eine Ausnehmung 5 vorgesehen, in die im Seitenwandbereich konturengleich der Schwenkschalter 1 angeordnet ist. Der Schwenkschalter 1 ist im unteren Bereich der Seitenwand 6 schwenkbar gelagert. Er ist als Winkelhebel mit einem oberen abgewinkelten freien Ende 8 ausgebildet. Das freie Ende 8 untergreift den restlichen Oberwandbereich 12.

Das abgewinkelte Ende 8 des Schwenkschalters 1 weist eine Nut 9 auf, in der der an Ende des Oberwandbereiches 12 befindliche Nocken 10 eingreift. Durch die Länge der Nut wird der Schaltweg mit seinen Endpositionen A und B begrenzt. Das abgewinkelte freie Ende vom Schwenkschalter 3 kann an seiner Oberseite mit einer keilförmig überhöhten Griffleiste 11 versehen sein.

Bezugszeichenliste

| 1 | Schwenkschalter |
|---|---|
| 2 | Hohlraum von 3 |
| 3 | Lenkstockhandgriff |
| 4 | Lenkstock |
| 5 | Ausnehmung in 3 |
| 6 | Seitenwand |
| 7 | obere Wandung |
| 8 | abgewinkeltes freies Ende von 3 |
| 9 | Nut in 8 |
| 10 | Nocken an 7 (12) |
| 11 | Griffleiste an 3 |
| 12 | Oberwandbereich |

**Patentansprüche**

1.   Schalter am Lenkstock eines Straßenfahrzeuges, dadurch gekennzeichnet, daß der Schalter, als Schwenkschalter (1) ausgebildet, im Hohlraum des Lenkstockhandgriffes (3) angeordnet ist, derart, daß die Betätigungsrichtung von Schalter (1) und Lenkstock (4) gleich ist.

2.   Schalter nach Anspruch 1, dadurch gekennzeichnet, daß der Lenkstockgriff (3) etwa handtellerbreit von seinem Ende eine Ausnehmung (5) im Seitenwandbereich (6) und teilweise in der oberen Wandung (7) aufweist, die konturengleich von dem Schwenkschalter (1) ausgefüllt ist, der, als einarmiger Winkelhebel ausgebildet, im unteren Seitenwandbereich des Lenkstockgriffes (3) schwenkbar gelagert ist und mit seinem abgewinkelten freien Ende (8) den verbliebenen Oberwandbereich (12) dichtend untergreift.

3.   Schalter nach Anspruch 1 oder 2, dadurch gekennzeichnet, daß die Schaltendlagen A und D des Schwenkschalters (3) durch den in einer Nut (9) des freien Schalterendes (8) auf Anschlag geführten Nockens (10), der an der oberen Wandung angebracht ist, vorgegeben sind.

4. Schalter nach den Ansprüchen 1 bis 3, dadurch gekennzeichnet, daß die Schalter-Aus-Stellung (A) durch Federdruck auf den Schwenkhebel (3) erzielt wird.

5. Schalter nach einem oder mehreren der Ansprüche 1 bis 4, dadurch gekennzeichnet, daß der Schwenkschalter (3) eine keilförmig überhöhte Griffleiste (11) aufweist.

Fig.1

Fig. 2

Fig. 3

Fig. 4